# FASCICULE DE BREVET EUROPEEN

(11) **EP 2 558 793 B1**
(45) Date de publication et mention de la délivrance du brevet: **22.01.2020**
(21) Numéro de dépôt: 11730440.2
(22) Date de dépôt: 12.04.2011
(51) Int. Cl.: F24F 11/74, F24F 11/00

(54) **DISPOSITIF DE MODULATION DE L'ENTREE DE L'AIR**
REGELUNGSVORRICHTUNG FÜR ZULUFT
INLET AIR FLOW MODULATION DEVICE

(30) Priorité: 12.04.2010 FR 1052766
(43) Date de publication de la demande: 20.02.2013
(73) Titulaire: SOMFY ACTIVITES SA, 74300 Cluses (FR)
(72) Inventeur: DEVIENNE, Grégoire, F-74000 Annecy (FR)
(74) Mandataire: Bugnion Genève
(86) Numéro de dépôt international: PCT/IB2011/051569
(87) Numéro de publication internationale: WO 2011/128840

(56) Documents cités:
- EP-A1- 0 638 775
- EP-A2- 0 240 977
- WO-A1-2008/007893
- DE-A1- 10 260 804
- DE-U1- 20 317 930
- FR-A1- 2 817 327
- US-B1- 6 237 854

## Description

L'invention concerne un dispositif de modulation automatique de l'entrée de l'air dans un local. La modulation est préférentiellement de type automatique, en fonction au moins d'un paramètre de l'air dans le local d'habitation, tel le degré d'humidité de l'air du local. La modulation peut également résulter d'une commande manuelle.

L'invention concerne également une installation domotique comprenant le dispositif ainsi qu'une unité de ventilation mécanique contrôlée.

L'invention concerne enfin un procédé de fonctionnement de l'installation domotique.

Le local est par exemple inclus dans une maison particulière ou dans un immeuble collectif regroupant plusieurs appartements, ou encore dans un immeuble de bureaux.

Il est naturel de disposer des moyens de ventilation naturelle dans les locaux d'habitation ou dans les locaux de bureaux. Ces moyens de ventilation sont souvent disposés sur le dormant des fenêtres. Les modèles les plus anciens présentent l'inconvénient d'une ouverture constante du passage d'air, quelles que soient les conditions extérieures ou intérieures au local. De ce fait, une tendance naturelle des occupants est de masquer lesdites ouvertures, afin d'éviter les déperditions thermiques, en introduisant malheureusement des problèmes liés à la présence d'air humide ou vicié dans le local. D'autres modèles comprennent des clapets mobiles dont l'ouverture ou la fermeture est provoquée manuellement.

Il est connu des brevets EP 0 240 977 et FR 2 817 327 un dispositif de modulation automatique de l'entrée de l'air dans un local en fonction de l'humidité de l'air dans ledit local. Le dispositif comprend notamment un tissu hygrosensible, dont les fibres s'allongent en présence d'humidité dans l'air et se rétractent quand l'air est sec. Ce tissu joue le rôle de capteur d'humidité et agit sur des moyens mécaniques commandant l'ouverture ou la fermeture d'un volet dont le déplacement donne une plus ou moins grande section de passage à un conduit d'arrivée de l'air extérieur. Le dispositif est prévu pour être monté sur un élément d'huisserie. Sa forme longiligne permet un montage aisé dans une découpe pratiquée par exemple au sommet d'un dormant de porte ou de fenêtre. Ledit document FR2817327 décrit un dispositif comprenant toutes les caractéristiques du préambule de la revendication indépendante 1.

La modulation automatique de l'entrée de l'air par ouverture variable est beaucoup mieux acceptée qu'une ouverture constante et conduit à des économies d'énergie significatives. Plusieurs documents de l'état de la technique, par exemple le brevet EP 0 638 775, décrivent donc de telles bouches d'aération, basées sensiblement sur un même principe d'utilisation de fibres ou tresses hygrosensibles. L'efficacité des dispositifs est renforcée par la combinaison avec un moyen mécanique sensible à la température de l'air extérieur, comme décrit dans le brevet EP 0 240 977 et dans la demande de brevet WO 2004/063635.

Les locaux comprennent de plus des moyens de ventilation mécanique contrôlée, parfois imposés par les normes locales. Ces moyens utilisent un moteur entraînant la rotation de pales de ventilation ou d'une turbine.

Dans un contexte de ventilation mécanique, le brevet FR 2 728 331 décrit un procédé et un dispositif de modulation de l'entrée de l'air par un volet commandable en position en fonction d'une information liée non seulement au nombre d'occupants mais à leur degré d'activité à l'aide de capteurs de mouvements. Dans ce document, comme dans de nombreux documents du domaine, le volet est commandé par un moteur électrique pour ajuster le débit, par exemple à l'aide d'un asservissement de position.

Le brevet US 3,307,469 donne un exemple de commande de volets d'admission d'air dans un bâtiment de grandes dimensions selon les informations fournies par un thermostat et un humidistat.

Les documents US6237854 et DE203117930U décrivent des dispositifs comprenant des émetteur radiofréquences. Cependant ces documents détectent uniquement l'état d'ouverture (ou de fermeture) d'une fenêtre.

Le document DE10260804 comporte deux capteurs pour déterminer le degré d'ouverture suffisant pour permettre une aération. Ainsi l'émetteur radiofréquence de ce document ne transmet pas l'information relative à un quelconque pourcentage d'ouverture du conduit d'air.

Il est connu d'utiliser des moteurs à puissance (ou à vitesse) variable, et des moyens de pilotage de cette puissance en fonction de paramètres horaires ou en fonction d'indications données par des capteurs de présence des occupants dans le local.

Le brevet US 7,231,967 décrit un système de ventilation dans lequel un contrôleur agit sur la vitesse des ventilateurs en fonction des données de capteurs de température. La position des volets d'admission d'air est également pilotée par le contrôleur.

Ces systèmes s'adressent à des installations complexes. Il n'a jamais été imaginé inversement de piloter la puissance de moteurs de ventilation d'un local en fonction d'une information issue de dispositifs de modulation manuelle ou automatique de l'entrée de l'air dans le local. Par exemple, une installation comprenant une ventilation mécanique contrôlée et munie exclusivement de dispositifs de modulation de l'entrée de l'air selon l'art antérieur peut se trouver dans une configuration où le moteur de ventilation est alimenté à puissance nominale alors que tous les conduits d'admission d'air sont en position fermée. Il en résulte un gaspillage d'énergie de ventilation et un fonctionnement non-optimal de la ventilation mécanique contrôlée.

L'invention remédie à ces inconvénients et améliore les dispositifs et les installations selon l'art antérieur. Elle concerne donc en particulier un dispositif de modulation de l'entrée de l'air dans un local apte à communiquer son état, de manière à permettre une adaptation de la puissance de ventilation. L'invention permet d'utiliser le dispositif dans une installation comprenant un équipement de ventilation mécanique muni d'un moteur de ventilation à puissance variable, selon un procédé optimisant le fonctionnement de l'installation.

Selon l'invention, le dispositif à de modulation de l'entrée de l'air dans un local d'habitation comprend les caractéristiques de la revendication 1.

Selon l'invention, le moyen sensible peut être de type hygrosensible, déformable au moins en fonction de l'humidité de l'air du local, de manière à ouvrir le conduit d'air quand le degré d'humidité du local augmente.

Selon l'invention, le moyen sensible peut être de type manuel, de manière à ouvrir ou fermer au moins partiellement le conduit d'air suite à une activation manuelle du moyen sensible par un utilisateur.

Selon l'invention, le moyen d'alimentation autonome peut comprendre un moyen d'accumulation d'énergie électrique.

Selon l'invention, le moyen d'accumulation peut consister en une pile primaire, un accumulateur ou un supercondensateur.

Selon l'invention, le moyen d'alimentation autonome peut être raccordé à un panneau photovoltaïque et/ou un générateur à effet thermoélectrique.

Selon l'invention, le moyen d'alimentation autonome peut être raccordé à un convertisseur mécanique-électrique disposé sur la transmission mécanique et/ou à un aérogénérateur disposé dans le conduit d'air.

Selon l'invention, le dispositif peut comprendre un aimant disposé sur la transmission mécanique ou solidaire du moyen de contrôle et l'émetteur radiofréquences peut comprendre un capteur sensible au champ magnétique pour déterminer l'information.

Selon l'invention, l'émetteur radiofréquences peut comprendre un transducteur de type optique ou ultrasonore pour déterminer l'information suite à une réflexion d'un faisceau émis par le transducteur.

Selon l'invention, l'émetteur radiofréquences peut utiliser le moyen d'alimentation autonome pour déterminer l'information.

Selon l'invention, l'émetteur radiofréquences peut utiliser un signal radiofréquences particulier (RFx) pour déterminer l'information, suite à une réflexion du signal radiofréquences particulier.

Selon l'invention, l'émetteur radiofréquences peut être relié à un capteur de déplacement, activé par la transmission mécanique ou par le moyen de contrôle, pour déterminer l'information.

Selon l'invention, l'information peut n'être transmise que lors d'un changement d'état complet de la section d'ouverture du conduit d'air, à savoir lors d'une première transition d'un état fermé vers un état ouvert et lors d'une seconde transition d'un état ouvert vers un état fermé.

Selon l'invention, l'installation domotique comprend une unité de ventilation mécanique contrôlée comprenant un moteur de ventilation à puissance variable et une unité de contrôle apte à adapter la puissance du moteur en fonction d'une information reçue depuis un dispositif tel que décrit ci-dessus ou en fonction d'une commande reçue depuis une unité de supervision de l'installation recevant ladite information depuis un dispositif tel que décrit ci-dessus.

Selon l'invention, le procédé de fonctionnement d'une installation domotique tel que décrite ci-dessus, comprend une étape de réduction de la puissance du moteur de ventilation quand une information provenant d'un dispositif tel que décrit ci-dessus indique une fermeture partielle ou totale d'un conduit d'air du dispositif.

L'invention sera mieux comprise par l'homme du métier grâce à la description détaillée de plusieurs modes d'exécution en relation avec les dessins accompagnants, dans lesquels :
La figure 1 décrit schématiquement un dispositif selon l'invention.
La figure 2 décrit schématiquement et partiellement une installation selon l'invention.
La figure 3 décrit une étape d'un procédé de fonctionnement de l'installation selon l'invention.

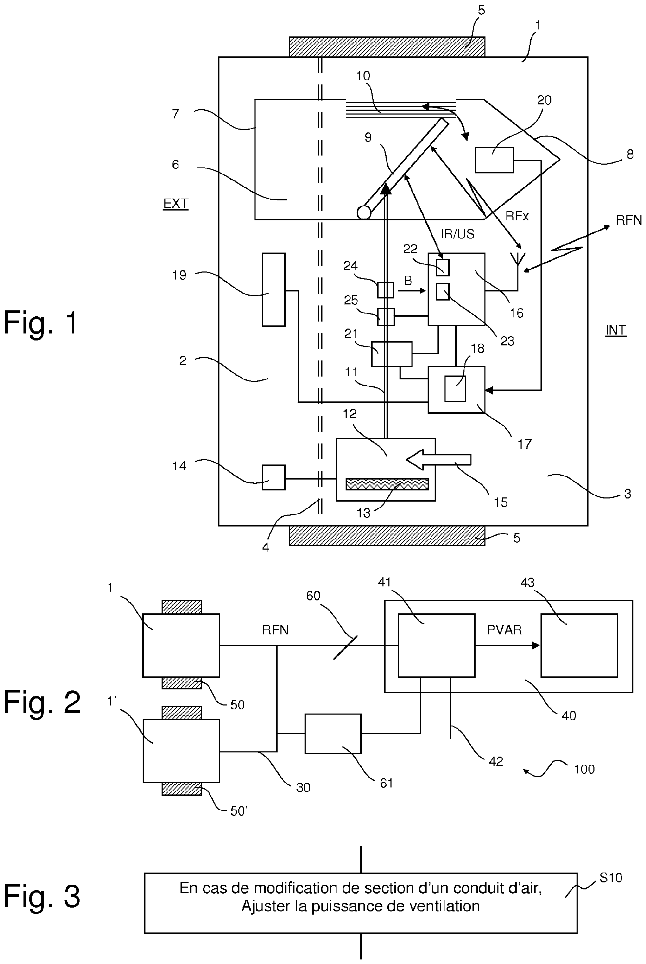

La figure 1 représente schématiquement un dispositif 1 de modulation de l'entrée de l'air dans un local d'habitation. Le dispositif comprend une partie externe 2 et une partie interne 3. La partie externe est en communication directe avec l'air extérieur au local, tandis que la partie interne est en communication directe avec l'air intérieur au local. Une séparation théorique 4 délimite sur la figure, par un trait double pointillé, les parties internes et externes. Le dispositif est apte à être installé à travers un élément 5 de fenêtre, de porte, ou de mur du local, isolant l'intérieur du local de l'extérieur. L'élément de fenêtre est par exemple le dormant de la fenêtre. L'élément de fenêtre peut être aussi un coffre de volet roulant associé à la fenêtre.

Le dispositif comprend un conduit d'air 6 présentant une ouverture externe 7 située dans la partie externe et une ouverture interne 8 située dans la partie interne, de manière à permettre un passage d'air entre l'ouverture externe et l'ouverture interne si un dispositif de ventilation mécanique, ou si toute autre raison, crée une dépression d'air dans le local par rapport à l'extérieur du local.

Un volet orientable 9 permet d'agir sur la section d'ouverture 10 du conduit d'air. De manière schématique, la section d'ouverture est représentée par des hachures horizontales figurant un flux laminaire de l'air dans la partie de conduit d'air non obturée par le volet orientable. Idéalement, le volet orientable permet de moduler la section du conduit d'air entre 0 et 100 % de sa valeur maximale, selon l'inclinaison du volet. Le volet orientable constitue un moyen de contrôle de la section d'ouverture du conduit d'air. D'autres moyens de contrôle connus peuvent être utilisés, par exemple des dispositifs à déformation et/ou à membrane.

Une transmission mécanique 11 agit sur le volet orientable en reliant ce dernier à un moyen sensible 12. Préférentiellement, le moyen sensible est de type hygrosensible et comprend un ensemble hygrosensible 13, déformable en fonction de l'humidité de l'air à son contact. Dans ce cas, la transmission mécanique 11 est apte à agir sur le volet de manière à ouvrir le conduit d'air quand le degré d'humidité de l'air de la partie interne augmente et à le refermer dans le cas contraire, en utilisant les modes de réalisation décrits dans l'art antérieur.

Alternativement ou de manière complémentaire, le moyen sensible intègre ou est raccordé à un capteur de température extérieure 14, comme décrit dans l'art antérieur.

Alternativement ou de manière complémentaire, le moyen sensible est de type manuel et comprend un moyen manuel d'activation 15.

Selon l'invention, le dispositif comprend de plus un émetteur radiofréquences 16, apte à émettre un signal radiofréquences RFN sur un réseau domotique. Par réseau domotique, on entend au moins l'usage d'un protocole commun et de fréquences communes entre éléments du réseau.

L'émetteur radiofréquences peut être de type bidirectionnel.

L'émetteur radiofréquences est alimenté par un moyen d'alimentation autonome 17, comprenant un moyen d'accumulation 18 d'énergie électrique tel une pile primaire, un accumulateur rechargeable ou un supercondensateur. Préférentiellement, le moyen d'alimentation autonome est connecté à un panneau photovoltaïque 19 disposé dans la partie externe et/ou à un aérogénérateur 20, disposé dans le conduit d'air, pour recharger le moyen d'accumulation. Une disposition externe du panneau photovoltaïque est particulièrement judicieuse quand le dispositif est installé sur une fenêtre.

Alternativement, le panneau photovoltaïque est disposé dans la partie interne, de manière à bénéficier de l'éclairement intérieur au local.

Alternativement, le panneau photovoltaïque est remplacé par un générateur thermoélectrique, par exemple à effet Peltier ou à effet Seebeck.

L'aérogénérateur fournit de l'énergie électrique quand il est entraîné par l'air circulant dans le conduit d'air, par exemple à l'aide d'une micro-turbine agissant sur un micro-générateur.

Préférentiellement, un convertisseur mécanique-électrique 21 est inséré dans la transmission mécanique 11 et est raccordé au moyen d'alimentation autonome de manière à fournir l'énergie électrique au moyen d'accumulation. Ce convertisseur mécanique-électrique est par exemple de type piézo-électrique ou de type magnétoélectrique. Son usage est particulièrement adapté au cas où la transmission mécanique présente deux états stables, un premier état stable correspondant à une fermeture du conduit d'air et un deuxième état stable correspondant à une ouverture du conduit d'air. Le passage brutal d'un état stable à l'autre état stable nécessite une transmission d'énergie dont une partie est prélevée par le convertisseur mécanique électrique pour être transmise au moyen d'accumulation.

L'émetteur radiofréquences est apte à émettre une information relative à la section d'ouverture du conduit d'air. Le contenu de cette information peut être plus ou moins riche. Au minimum, il s'agit d'une indication d'état ouvert ou d'état fermé du conduit d'air. Alternativement, il s'agit d'une information numérique d'orientation du volet, exprimée par exemple de manière angulaire ou en pourcentage d'ouverture du conduit. Dans tous les cas, l'émetteur radiofréquences est apte à déduire cette information d'une opération réalisée par l'émetteur radiofréquences ou d'un signal issu d'un capteur ou d'un élément électrique raccordé à l'émetteur radiofréquences.

Selon une première variante, l'émetteur radiofréquences est apte à émettre et recevoir un signal particulier RFx dans une gamme de fréquences telle que la réflexion du signal particulier sur le volet orientable et/ou sur la transmission mécanique est détectable par un moyen de réception de l'émetteur radiofréquences. Par exemple un signal particulier est émis dans une bande de fréquences supérieures à 5 GHz, dite « Ultra-Wide-Band » (UWB). Selon l'amplitude du signal réfléchi, l'émetteur radiofréquences est apte à déterminer si le volet orientable est dans un état ouvert ou fermé. Cette variante est particulièrement intéressante si les signaux RFN émis sur le réseau domotique sont eux-mêmes compris dans la gamme de fréquences utilisée pour le signal particulier.

Selon une deuxième variante, un transducteur bidirectionnel 22 contenu dans l'émetteur radiofréquences est apte à émettre un faisceau IR/US vers le volet orientable et à mesurer l'amplitude d'un faisceau réfléchi par celui-ci. Le faisceau est par exemple de type optique (visible ou infrarouge) ou de type ultrasonore. Alternativement, le transducteur particulier est de type radiofréquences (UWB) comme expliqué précédemment. Alternativement le faisceau est émis vers la transmission mécanique et est réfléchi par celle-ci, ou par un réflecteur spécialement disposé sur celle-ci.

Selon une troisième variante, un capteur magnétique 23, tel un interrupteur à lame souple (ILS ou contact Reed) est compris dans l'émetteur radiofréquences, et un aimant 24 est disposé sur la transmission mécanique 11, à proximité du capteur magnétique. La position ou le déplacement de l'aimant selon l'état de la transmission mécanique, donc selon le degré d'ouverture du conduit d'air, est détecté par le capteur. Alternativement, l'aimant est directement disposé sur le volet orientable. Le capteur magnétique peut être de type magnétorésistif.

Selon une quatrième variante, le convertisseur mécanique-électrique 21 est également raccordé à l'émetteur radiofréquences, et c'est l'état du convertisseur mécanique-électrique qui traduit l'état de la transmission mécanique, donc le degré d'ouverture du conduit d'air. Du fait d'une dissymétrie mécanique, il y a par exemple production d'une plus grande quantité d'énergie électrique lors d'un passage dans un état fermé du conduit d'air que lors d'un passage dans un état ouvert.

Selon une cinquième variante analogue à la quatrième variante, c'est une tension issue de l'aérogénérateur qui est utilisée pour déduire si le conduit est ouvert (production d'électricité) ou fermé (absence de production). Dans tous les cas, une tension interne au moyen d'alimentation autonome peut donc être utilisée pour déduire l'information sur l'état d'ouverture du conduit d'air.

Selon une sixième variante, particulièrement simple à mettre en œuvre, un capteur de déplacement 25 tel un contact sec ou un potentiomètre est raccordé à l'émetteur radiofréquences. Le capteur de déplacement est activé par la transmission mécanique ou alternativement par le moyen de contrôle et fournit un signal électrique représentatif de l'état de la transmission mécanique ou du moyen de contrôle.

La figure 2 décrit schématiquement et partiellement une installation 100 selon l'invention. L'installation comprend un premier dispositif 1 selon l'invention, installé de manière traversante dans un premier élément 50 d'une fenêtre. Elle comprend un deuxième dispositif 1' installé de même sur un deuxième élément 50' d'une fenêtre. L'installation comprend au moins une unité de ventilation mécanique contrôlée 40. Les dispositifs communiquent sur un réseau domotique 30 relié à l'unité de ventilation mécanique contrôlée, à l'aide de signaux radiofréquences RFN vers une unité de contrôle 41 de l'unité de ventilation mécanique contrôlée.

L'unité de contrôle est raccordée au réseau électrique commercial 12 et à un moteur de ventilation 43. Elle est apte à transmettre une puissance électrique variable PVAR au moteur de ventilation.

L'unité de contrôle est apte à utiliser l'information transmise par le dispositif 1 (et/ou par le dispositif 1') pour adapter la puissance électrique variable transmise au moteur.

Alternativement, l'installation comprend une unité de supervision 61 distincte de l'unité de contrôle. L'unité de contrôle 41 ne communique pas sur le réseau domotique. Un segment 60 symbolise alors que le réseau domotique n'est pas relié à l'unité de ventilation mécanique contrôlée. Dans ce cas, l'unité de supervision assure le relais d'information entre le réseau domotique et l'unité de contrôle. Cette unité de supervision est apte à recevoir l'information sur l'état d'ouverture du ou des conduits d'air depuis un ou plusieurs des dispositifs et à émettre à son tour une commande de variation de puissance vers l'unité de contrôle.

L'intérêt d'une unité de supervision distincte est de permettre de manière simple la rénovation d'une installation existante en remplaçant les anciens moyens d'entrée d'air par des dispositifs selon l'invention et en raccordant l'unité de supervision à une unité de ventilation mécanique contrôlée déjà munie de moyens de variation de puissance.

La figure 3 décrit une étape S10 d'un procédé de fonctionnement de l'installation selon l'invention. Le procédé de fonctionnement est implanté, sous forme de programme informatique, dans l'unité de contrôle.

Alternativement, le procédé est implanté dans l'unité de supervision. Par la suite, les descriptions données relativement à l'unité de contrôle s'appliquent aussi à l'unité de supervision et/ou à un sous-ensemble constitué par l'unité de contrôle et l'unité de supervision.

Dans cette étape, une information transmise par un dispositif a été reçue par l'unité de contrôle. Si l'unité de contrôle déduit de l'information que la section du conduit d'air du dispositif a été modifiée, par exemple est passé dans un état fermé (ou partiellement fermé relativement à un état antérieur), alors l'unité de contrôle ajuste la puissance variable PVAR fournie au moteur de ventilation, par exemple en la diminuant.

L'unité de contrôle procède de manière inverse en cas d'information relative à une croissance de la section d'ouverture d'un conduit d'air.

La diminution (ou inversement l'augmentation) de puissance peut être quantifiée : par exemple s'il existe dans l'habitation 4 dispositifs de modulation d'entrée de l'air et 1 dispositif non modulable, il peut être décidé que la puissance variable PVAR peut varier de Po à 5 fois Po : la puissance étant diminuée ou augmentée d'un quantum de puissance Po lors de chaque réception d'une information de fermeture ou d'ouverture émise par l'un des dispositifs.

Le procédé est susceptible de donner lieu à plusieurs variantes. Par exemple, le moteur de ventilation peut être prévu pour fonctionner à deux régimes de puissance seulement, comme le fait un moteur triphasé selon que ses enroulements sont alimentés en étoile ou en triangle. Dans ce cas, l'unité de contrôle comptabilise le nombre total de dispositifs dans un état ouvert et le nombre de dispositifs dans un état fermé pour pendre une décision sur la valeur adaptée de la puissance variable, par exemple en comparant à un seuil prédéfini.

Si l'information reçue des dispositifs comprend une valeur analogique relative à la section d'ouverture de chaque dispositif, l'unité de contrôle totalise les valeurs analogiques pour choisir la puissance la mieux adaptée.

Dans une réalisation simple, chaque dispositif transmet l'information au moment d'un changement d'état complet de la section d'ouverture du conduit d'air, à savoir lors d'une première transition d'un état fermé vers un état ouvert et lors d'une seconde transition d'un état ouvert vers un état fermé.

Le risque de transitions simultanées sur différents dispositifs est en effet minime. De plus, ce mode de transmission de l'information est parfaitement adapté à une génération d'énergie électrique à l'aide du convertisseur mécano-électrique.

Alternativement, l'unité de contrôle interroge les différents dispositifs par scrutation, par exemple à heure dite, afin qu'ils transmettent l'information, et l'unité de contrôle décide de la puissance variable à appliquer au moteur en combinant les diverses informations issues des différents dispositifs.

Dans ce cas, c'est directement l'état de la section d'ouverture du conduit ou des conduits d'air qui est pris en compte et non la modification de cet état.

Dans l'esprit de l'invention, les grandeurs « puissance » et « vitesse » sont équivalentes quand il s'agit du moteur de ventilation.

Quand il s'agit de réseau domotique et de transmission de commandes entre éléments, les mots « liaison » ou « relié » ne nécessitent pas une connexion physique entre les éléments.

## Revendications

1. Dispositif (1) de modulation de l'entrée de l'air dans un local d'habitation, apte à être installé à travers un élément de fenêtre, de porte ou de mur du local, comprenant un moyen sensible (12) agissant mécaniquement via une transmission mécanique (11) sur un moyen de contrôle (9) de la section d'ouverture (10) d'un conduit d'air (6) disposé entre l'extérieur et l'intérieur du local, où le moyen de contrôle (9) permet de moduler la section d'ouverture (10) du conduit d'air (6) entre 0 et 100% de sa valeur maximale, **caractérisé en ce qu'**il comprend un émetteur radiofréquences (16) alimenté par un moyen d'alimentation autonome (17) et apte à transmettre une information relative à ladite section d'ouverture du conduit d'air.

2. Dispositif selon la revendication 1, **caractérisé en ce que** le moyen sensible est de type hygrosensible, déformable au moins en fonction de l'humidité de l'air du local, de manière à ouvrir le conduit d'air quand le degré d'humidité du local augmente.

3. Dispositif selon la revendication 1, **caractérisé en ce que** le moyen sensible est de type manuel, de manière à ouvrir ou fermer au moins partiellement le conduit d'air suite à une activation manuelle du moyen sensible par un utilisateur.

4. Dispositif selon l'une des revendications précédentes, **caractérisé en ce que** le moyen d'alimentation autonome comprend un moyen d'accumulation d'énergie électrique.

5. Dispositif selon la revendication 4, **caractérisé en ce que** le moyen d'accumulation consiste en une pile primaire, un accumulateur ou un supercondensateur.

6. Dispositif selon l'une des revendications précédentes, **caractérisé en ce que** le moyen d'alimentation autonome est raccordé à un panneau photovoltaïque et/ou un générateur à effet thermoélectrique.

7. Dispositif selon l'une des revendications précédentes, **caractérisé en ce que** le moyen d'alimentation autonome est raccordé à un convertisseur mécanique-électrique (21) disposé sur la transmission mécanique (11) et/ou à un aérogénérateur (20) disposé dans le conduit d'air.

8. Dispositif selon l'une des revendications précédentes, **caractérisé en ce qu'**il comprend un aimant disposé sur la transmission mécanique ou solidaire du moyen de contrôle et **en ce que** l'émetteur radiofréquences comprend un capteur sensible au champ magnétique pour déterminer l'information.

9. Dispositif selon l'une des revendications 1 à 7, **caractérisé en ce que** l'émetteur radiofréquences comprend un transducteur (22) de type optique ou ultrasonore pour déterminer l'information suite à une réflexion d'un faisceau émis par le transducteur.

10. Dispositif selon l'une des revendications 1 à 7, **caractérisé en ce que** l'émetteur radiofréquences utilise le moyen d'alimentation autonome pour déterminer l'information.

11. Dispositif selon l'une des revendications 1 à 7, **caractérisé en ce que** l'émetteur radiofréquences utilise un signal radiofréquences particulier (RFx) pour déterminer l'information, suite à une réflexion du signal radiofréquences particulier.

12. Dispositif selon l'une des revendications 1 à 7, **caractérisé en ce que** l'émetteur radiofréquences est relié à un capteur de déplacement (25), activé par la transmission mécanique ou par le moyen de contrôle, pour déterminer l'information.

13. Dispositif selon l'une des revendications précédentes, **caractérisé en ce que** l'information n'est transmise que lors d'un changement d'état complet de la section d'ouverture du conduit d'air, à savoir lors d'une première transition d'un état fermé vers un état ouvert et lors d'une seconde transition d'un état ouvert vers un état fermé.

14. Installation domotique (100) comprenant une unité de ventilation (40) mécanique contrôlée comprenant un moteur de ventilation (43) à puissance variable, **caractérisée en ce qu'**elle comprend une unité de contrôle (42) apte à adapter la puissance du moteur en fonction d'une information reçue depuis un dispositif (1, 1') selon l'une des revendications précédentes ou en fonction d'une commande reçue depuis une unité de supervision (61) de l'installation recevant ladite information depuis un dispositif selon l'une des revendications précédentes.

15. Procédé de fonctionnement d'une installation domotique selon la revendication 14, **caractérisé en ce qu'**il comprend une étape de réduction de la puissance du moteur de ventilation quand une information provenant d'un dispositif selon l'une des revendications 1 à 13 indique une fermeture partielle d'un conduit d'air du dispositif.

## Patentansprüche

1. Vorrichtung (1) zum Modulieren des Lufteintritts in einen Wohnraum, die über ein Fenster-, Tür- oder Mauerelement des Raums installiert werden kann, umfassend ein empfindliches Mittel (12), das über eine mechanische Übertragungsvorrichtung (11) auf ein Steuermittel (9) des Öffnungsquerschnitts (10) einer Luftleitung (6), die zwischen dem Äußeren und dem Inneren des Raums angeordnet ist, mechanisch einwirkt, wobei es das Steuermittel (9) ermöglicht, den Öffnungsquerschnitt (10) der Luftleitung (6) zwischen 0 und 100 % seines Höchstwertes zu modulieren, **dadurch gekennzeichnet, dass** sie einen Hochfrequenzsender (16) umfasst, der durch ein unabhängiges Versorgungsmittel (17) gespeist wird und in der Lage ist, eine Information über den Öffnungsquerschnitt der Luftleitung zu übertragen.

2. Vorrichtung nach Anspruch 1, **dadurch gekennzeichnet, dass** das empfindliche Mittel luftfeuchtigkeitsempfindlicher Art ist, das mindestens als Funktion der Feuchtigkeit der Luft des Raums verformbar ist, um die Luftleitung zu öffnen, wenn der Feuchtigkeitsgrad des Raums zunimmt.

3. Vorrichtung nach Anspruch 1, **dadurch gekennzeichnet, dass** das empfindliche Mittel manueller Art ist, um die Luftleitung infolge einer manuellen Aktivierung des empfindlichen Mittels durch einen Benutzer mindestens teilweise zu öffnen oder zu schließen.

4. Vorrichtung nach einem der vorhergehenden Ansprüche, **dadurch gekennzeichnet, dass** das unabhängige Versorgungsmittel ein elektrisches Energiespeichermittel umfasst.

5. Vorrichtung nach Anspruch 4, **dadurch gekennzeichnet, dass** das Speichermittel aus einer Primärzelle, einem Akkumulator oder einem Superkondensator besteht.

6. Vorrichtung nach einem der vorhergehenden Ansprüche, **dadurch gekennzeichnet, dass** das unabhängige Versorgungsmittel an ein Photovoltaik-Modul und/oder einen thermoelektrischen Generator angeschlossen ist.

7. Vorrichtung nach einem der vorhergehenden Ansprüche, **dadurch gekennzeichnet, dass** das unabhängige Versorgungsmittel an einen mechanisch-elektrischen Wandler (21), der auf der mechanischen Übertragungsvorrichtung (11) angeordnet ist, und/oder an einen Windgenerator (20), der in der Luftleitung angeordnet ist, angeschlossen ist.

8. Vorrichtung nach einem der vorhergehenden Ansprüche, **dadurch gekennzeichnet, dass** sie einen Magneten umfasst, der auf der mechanischen Übertragungsvorrichtung angeordnet ist oder mit dem Steuermittel fest verbunden ist, und dass der Hochfrequenzsender einen Sensor umfasst, der auf das Magnetfeld anspricht, um die Information zu bestimmen.

9. Vorrichtung nach einem der Ansprüche 1 bis 7, **dadurch gekennzeichnet, dass** der Hochfrequenzsender einen optischen oder Ultraschallwandler (22) umfasst, um infolge einer Reflexion eines Strahls, der durch den Wandler emittiert wird, die Information zu bestimmen.

10. Vorrichtung nach einem der Ansprüche 1 bis 7, **dadurch gekennzeichnet, dass** der Hochfrequenzsender das unabhängige Versorgungsmittel verwendet, um die Information zu bestimmen.

11. Vorrichtung nach einem der Ansprüche 1 bis 7, **dadurch gekennzeichnet, dass** der Hochfrequenzsender ein bestimmtes Hochfrequenzsignal (RFx) verwendet, um infolge einer Reflexion des bestimmten Hochfrequenzsignals die Information zu bestimmen.

12. Vorrichtung nach einem der Ansprüche 1 bis 7, **dadurch gekennzeichnet, dass** der Hochfrequenzsender mit einem Wegsensor (25) verbunden ist, der durch die mechanische Übertragungsvorrichtung oder durch das Steuermittel aktiviert wird, um die Information zu bestimmen.

13. Vorrichtung nach einem der vorhergehenden Ansprüche, **dadurch gekennzeichnet, dass** die Information nur während einer vollständigen Zustandsänderung des Öffnungsquerschnitts der Luftleitung übertragen wird, nämlich bei einem ersten Übergang von einem geschlossenen Zustand auf einen geöffneten Zustand oder während eines zweiten Übergangs von einem geöffneten Zustand auf einen geschlossenen Zustand.

14. Haustechnikanlage (100), umfassend eine gesteuerte mechanische Lüftungseinheit (40), die einen Lüftungsmotor (43) mit variabler Leistung umfasst, **dadurch gekennzeichnet, dass** sie eine Steuereinheit (42) umfasst, die geeignet ist, um die Leistung des Motors als Funktion einer Information, die von einer Vorrichtung (1, 1') nach einem der vorhergehenden Ansprüche empfangen wird, oder als Funktion eines Befehls, der von einer Überwachungseinheit (61) der Anlage empfangen wird, welche die Information von einer Vorrichtung nach einem der vorhergehenden Ansprüche empfängt, anzupassen.

15. Betriebsverfahren einer Haustechnikanlage nach Anspruch 14, **dadurch gekennzeichnet, dass** es einen Schritt zum Reduzieren der Leistung des Lüftungsmotors umfasst, wenn eine Information von einer Vorrichtung nach einem der Ansprüche 1 bis 13 eine Teilschließung einer Luftleitung der Vorrichtung angibt.

## Claims

1. A device (1) for modulating the air intake into a residential site, able to be installed through a window, door or wall element of the site, comprising a sensitive means (12) acting mechanically via a mechanical transmission (11) on a control means (9) of the opening section (10) of an air pipe (6) arranged between the outside and the inside of the site, where the control means (9) makes it possible to modulate the opening section (10) of the air pipe (6) between 0 and 100% of its maximum value, **characterized in that** it comprises a radiofrequency transmitter (16) supplied by an autonomous supply means (17) and able to transmit information relative to said opening section of the air pipe.

2. The device according to claim 1, **characterized in that** the sensitive means is of the moisture-sensitive type, deformable at least as a function of the air moisture of the site, so as to open the air pipe when the moisture level of the site increases.

3. The device according to claim 1, **characterized in that** the sensitive means is of the manual type, so as to open or close the air pipe at least partially following a manual activation of the sensitive means by a user.

4. The device according to one of the preceding claims, **characterized in that** the autonomous supply means comprises an electric energy accumulation means.

5. The device according to claim 4, **characterized in that** the accumulation means consists of a primary cell, an accumulator or a supercapacitor.

6. The device according to one of the preceding claims, **characterized in that** the autonomous supply means is connected to a photovoltaic panel and/or a thermoelectric effect generator.

7. The device according to one of the preceding claims, **characterized in that** the autonomous supply means is connected to a mechanical-electrical converter (21) arranged on the mechanical transmission (11) and/or to an aerogenerator (20) arranged in the air pipe.

8. The device according to one of the preceding claims, **characterized in that** it comprises a magnet arranged on the mechanical transmission or secured to the control means and **in that** the radiofrequency transmitter comprises a sensor sensitive to the magnetic field in order to determine the information.

9. The device according to one of claims 1 to 7, **characterized in that** the radiofrequency transmitter comprises a transducer (22) of the optical or ultrasound type in order to determine the information following a reflection of a beam emitted by the transducer.

10. The device according to one of claims 1 to 7, **characterized in that** the radiofrequency transmitter uses the autonomous supply means in order to determine the information.

11. The device according to one of claims 1 to 7, **characterized in that** the radiofrequency transmitter uses a particular radiofrequency signal (RFx) in order to determine the information, following a reflection of the particular radiofrequency signal.

12. The device according to one of claims 1 to 7, **characterized in that** the radiofrequency transmitter is connected to a movement sensor (25), activated by the mechanical transmission or by the control means, in order to determine the information.

13. The device according to one of the preceding claims, **characterized in that** the information is only transmitted during a complete state change of the opening section of the air pipe, namely during a first transition from a closed state to an open state and during a second transition from an open state to a closed state.

14. A home automation installation (100) comprising a controlled mechanical ventilation unit (40) comprising a variable-power ventilation motor (43), **characterized in that** it comprises a control unit (42) able to adapt the power of the motor as a function of an information received from a device (1, 1') according to one of the preceding claims or as a function of a command received from a supervision unit (61) of the installation receiving said information from a device according to one of the preceding claims.

15. An operating method of a home automation installation according to claim 14, **characterized in that** it comprises a step for reducing the power of the ventilation motor when an information coming from a device according to one of claims 1 to 13 indicates a partial closure of an air pipe of the device.
